# EUROPEAN PATENT SPECIFICATION

(11) **EP 1 747 873 B1**
(45) Date of publication and mention of the grant of the patent: **01.09.2010**
(21) Application number: 05090221.2
(22) Date of filing: 26.07.2005
(51) Int. Cl.: B29C 51/20, B29C 69/02, B29C 47/08, B29C 69/00, B29C 47/34, B29C 31/08, B29C 37/00, B29C 37/02, B29C 51/44, B29C 51/26, B29C 43/34, B29C 43/04

(54) **Method and apparatus for extruding a sheet and transferring it to a thermoforming mould having a sliding lower die**
Verfahren und Vorrichtung zum Extrudieren und zum Übertragen einer Folie zu einer Thermoformeinrichtung mit bewegbarer unterer Form
Procédé et dispositif pour extruder et transferer une feuille à une machine de thermoformage avec matrice mobile

(43) Date of publication of application: 31.01.2007
(73) Proprietor: Kojima Press Industry Co., Ltd., Toyota-shi, Aichi-ken (JP)
(72) Inventor: Ando, Masaaki, c/o PLAMAC Co., Ltd., Aichi-ken (JP); Mizuno, Yoshihiro, c/o WAKO Machine Works Co., Ltd, Aichi-ken (JP)
(74) Representative: Baumgärtel, Gunnar

(56) References cited:
- EP-A- 1 279 486
- WO-A-95/01248
- DE-A1- 1 958 057
- DE-A1- 2 325 812
- DE-A1- 10 163 520
- DE-A1- 19 961 743
- DE-B- 1 154 690
- DE-U1- 29 807 426
- GB-A- 1 436 132
- GB-A- 2 055 668
- US-A- 5 088 592
- US-A- 5 221 406
- US-A1- 2002 020 932
- US-A1- 2002 079 044
- PATENT ABSTRACTS OF JAPAN vol. 018, no. 459 (M-1663), 26 August 1994 (1994-08-26) -& JP 06 144669 A (MITSUBISHI PLASTICS IND LTD; others: 01), 24 May 1994 (1994-05-24)

## Description

### BACKGROUND OF THE INVENTION

### Technical Field

The present invention relates to a press-molding machine that extrudes a melted resin into a sheet material to press so that the sheet material is pressed and molded into a predetermined shape. In particular, the present invention relates to press-molding performed between a lower die and the corresponding upper die.

### Description of the Related Art

Press-molding machines are known in manufacturing automotive interior or exterior parts. For example, Japanese Laid-Open Patent Publication No. 6-144669 teaches a press-molding machine wherein a resin sheet, continuously extruded from an extrusion device, is received by a transfer device including a first conveyor belt, a second conveyor belt, and a framework. Furthermore, a cutting device for cutting the continuous resin sheet is disposed between the first and the second conveyor belts. The resin sheet is received on the first conveyor belt and then transferred to the second conveyor belt. The resin sheet, cut in a predetermined length by the cutting device, is transferred from the second conveyor belt onto the framework. With the framework moving, the resin sheet is further transferred to be molded between a lower die and the corresponding upper die.

However, the above-mentioned molding machine is constructed to have the extruding device, the cutting device, the transfer device, the lower die and the upper die, in a single component. Due to this, the entire machine needs to be supported by a large frame.

In addition, a press-molding machine disclosed in Japanese Laid-Open Patent Publication No. 63-91224 is constructed so as to have a conveyor belt enter between opened dies. This requires that the clearance between the dies needs to be long enough to allow such interpositioning.

Such a larger machine needs more space for installation, which results in more workload for handling or installing the machine. Also, the maintenance or upgrading cost may be increased because the entire component should be replaced. Furthermore, the workload for post-processing the molded product or for recycling the scrap generated during the molding is not taken into consideration in the above-mentioned prior art machines.

DE-OS 1 958 057 discloses a dislocation device for molds of press-molding machines being intended to mold plastics, comprising two slides on each of which a lower part of a molding or injection mold is mounted. These lower parts can be alternatively brought from a waiting position into a working position.

US 2002/0079044 A1 relates to an apparatus for the production of hollow bodies, comprising two forming stations and two heating stations and also two transport devices which in each case transport a plastic sheet to a heating station and subsequently to a forming station. The forming stations are capable of being operated independently of one another, whereas the transport devices can transport the plastic sheets to the forming stations from opposite directions.

GB 2055668 A relates to a hydraulic press for processing materials like hides, leather, rubber, plastics and fabrics. A working table of the press is rotatable about a vertical axis so that a part of the working table can be inside the press, whereas the other part of the working table can be outside the press. Thus, loading of the press with materials to be pressed can be done while the press is in use.

DE-OS 2 325 812 discloses a press for producing molded parts, comprising a molding frame into which a resin component can be filled and afterwards be pressed by an associated press. By knocking the molding frame against a part of the machine, a taking-off of the molded article out of the frame is made possible.

WO 95/01248 A1 discloses an apparatus for depositing two superposed layers of thermoplastic material on a lower die of a thermocompression molding machine. To achieve this, a conveyor and deposition device is used which comprises a movable carriage carrying a conveyor belt.

US 5,088,592 discloses an apparatus for conveying and depositing an adhesive, flexible material by way of a flexible base in a right side up position which essentially maintains its shape in a deposition station.

### SUMMARY OF THE INVENTION

Therefore, it is one object of the present invention to teach improved press-molding machine and a corresponding method that save installation space and workload for handling the machine, and for post-processing the products.

This is achieved by a machine and a method according to claims 1 and 5.

According to one aspect of the present teachings, a press-molding machine is taught which may include an extrusion apparatus, a transfer apparatus, and a molding apparatus. The extrusion apparatus may extrude a melted resin into a sheet shape. The transfer apparatus may receive and transfer a sheet material extruded from the extrusion apparatus. The molding apparatus may press-mold the sheet material transferred from the transfer apparatus. As a result, the extrusion apparatus, the transfer apparatus and the molding apparatus are allowed to be independently arranged and constructed. This enables each component to be designed within a smaller frame and more easily handled. Therefore, in maintenance or upgrading, not all of the components need to be replaced. The cost as well as the workload may be more reduced.

According to another aspect of the present teachings, the extrusion apparatus may be supported by a supporting column standing on a base on the floor so that the extrusion apparatus can be moved up or down and pivoted with respect to the supporting column. The base may be movable backward and forward along the floor. This enables the extrusion apparatus to be easily installed or maintained. Also, it is possible to use this extrusion apparatus in combination with other transfer apparatuses in various geometries.

According to another aspect of the present teachings, the press-molding machine may further include a cutter provided at the outlet of the extrusion die. The cutter may cut the sheet material in an predetermined length corresponding to a single molded product. This enables the continuously extruded sheet material to be cut before press-molding. Therefore, the post-processing of the press-molding is simplified so that the machine may be configured into a compact architecture.

According to another aspect of the present teachings, the transfer apparatus may include a conveyor belt and may be reciprocated substantially horizontally between a first position, directly below the extrusion die of the extrusion apparatus, and a second position, directly above the lower die of the molding apparatus. On one hand, when receiving on the conveyor belt the sheet material fed out from the extrusion apparatus, the transfer apparatus moves toward the molding apparatus at a speed corresponding to the extruding speed of the sheet material. On the other hand, when loading from the conveyor belt onto the lower die the sheet material cut in an predetermined length corresponding to a single molded product, the transfer apparatus moves back toward the extrusion die at a predetermined speed with the conveyor belt rotatably driven in the loading direction. This enables the sheet material to be fed without being overlapped, folded or wrinkled onto the conveyor belt of the transfer apparatus.

According to another aspect of the present teachings, the transfer apparatus may be changeable in a forward moving speed after having received the sheet material fed out from the extrusion die onto the conveyor belt, and/or in a backward moving speed after having loaded the sheet material from the conveyor belt onto the lower die of the molding apparatus. If the forward moving speed is changed from low-speed to high-speed after the transfer apparatus has received the sheet material, the sheet material may be loaded onto the lower die with less of an interval. Also, if the backward moving speed is changed from low-speed to high-speed after the transfer apparatus has loaded the sheet material from the conveyor belt onto the lower die, the transfer apparatus may quickly be ready and waiting for another sheet material fed out from the extrusion die. Therefore, the operation cycle time may be effectively reduced.

It should be noted that changing the moving speed of the transfer apparatus allows for controlling the temperature of the sheet material. If moving at a high-speed, the transfer apparatus may transfer a sheet material not sufficiently cooled down to the molding apparatus. On the contrary, if moving at a low-speed, the transfer apparatus may transfer a sheet material sufficiently cooled down to the molding apparatus. This leads to quality control of the products.

According to another aspect of the present teachings, the molding apparatus may include a stopper. This may prevent the sheet material from passing, due to inertia, beyond a predetermined position when the sheet material is unloaded from the transfer apparatus.

According to another aspect of the present teachings, a press-molding machine is taught that includes a slider, slider rails, a lower die and an upper die. The slider rails may be slidably engaging the slider. A resin sheet material may be loaded onto the lower die that is mounted on the slider. The lower die may fit into the upper die for press-molding. The lower die on the slider may move reciprocably between a first position where the lower die can receive the resin sheet material and a second position where the lower die is positioned directly below the upper die for the closing movement between the upper die and the lower die. This prevents the transfer apparatus from being limited by the upper die when entering between the upper die and the lower die, because the above area of the lower die is free from the corresponding upper die when the lower die is loading the sheet material thereon. Therefore, the machine may be made compact.

According to another aspect of the present teachings, a method of press-molding is taught that may include the following steps: a) providing a sheet material in an predetermined length corresponding to a single molded product; b) feeding the sheet material onto a conveyor bel; c) loading the sheet material from the conveyor belt onto a lower die at a waiting position; d) sliding the lower die having the sheet material from the waiting position to a working position; e) upwardly moving the lower die having the sheet material toward the upper die at the working position; f) press-molding the sheet material between the lower die and the upper die; g) downwardly moving the lower die at the working position; h) sliding the lower die back to the working position; i) catching the molded product dropped from the upper die at the working position; j) catching the after-molding scrap dropped from the upper die; and k) transferring the scrap to a scrap shredder. This allows for easier post-processing of the molded product and the generated scrap because the operation cycle may perform both the press-molding and the post-processing of the product and the scrap. Therefore, the method may effectively reduce the workload of the operators.

Additional objects, features, and advantages of the present invention will be readily understood after reading the following detailed description together with the claims and the accompanying drawings.

### BRIEF DESCRIPTION OF THE DRAWINGS

FIG. 1 is a front elevational view of a press-molding machine according to one representative embodiment of the present invention;
FIG. 2 is a plan view of the invention of FIG. 1, illustrating a condition in which an upper die, an upper frame of the molding apparatus, and a stopper for a transfer apparatus are removed;
FIG. 3 is a right side elevational view of the invention of FIG. 1, illustrating a condition in which the stopper for the transfer apparatus is removed;
FIG. 4 is a partially enlarged view of FIG. 1;
FIG. 5(a) is a schematic view of the press-molding machine showing a first step of a press-molding process in which a sheet material is disposed on a lower die;
FIG. 5(b) is a schematic view of the press-molding machine showing a second step of the press-molding process in which the lower die having the sheet material is moved so as to be positioned under the upper die;
FIG. 5(c) is a schematic view of the press-molding machine showing a third step of the press-molding process in which the lower die having the sheet material has been moved up and fitted into the upper die;
FIG. 5(d) is a schematic view of the press-molding machine showing a fourth step of the press-molding process in which the lower die has been lowered onto the same level as FIG. 5(b) while the molded sheet material is retained in the upper die;
FIG. 5(e) is a schematic view of the press-molding machine showing a fifth step of the press-molding process in which the molded sheet material, i.e. product, and pieces of scrap have fallen down and are caught by the chute.

### DETAILED DESCRIPTION OF THE INVENTION

Each of the additional features and teachings disclosed above and below may be utilized separately or in conjunction with other features and teachings to provide improved press-molding machines and methods for designing and using such press-molding machines. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

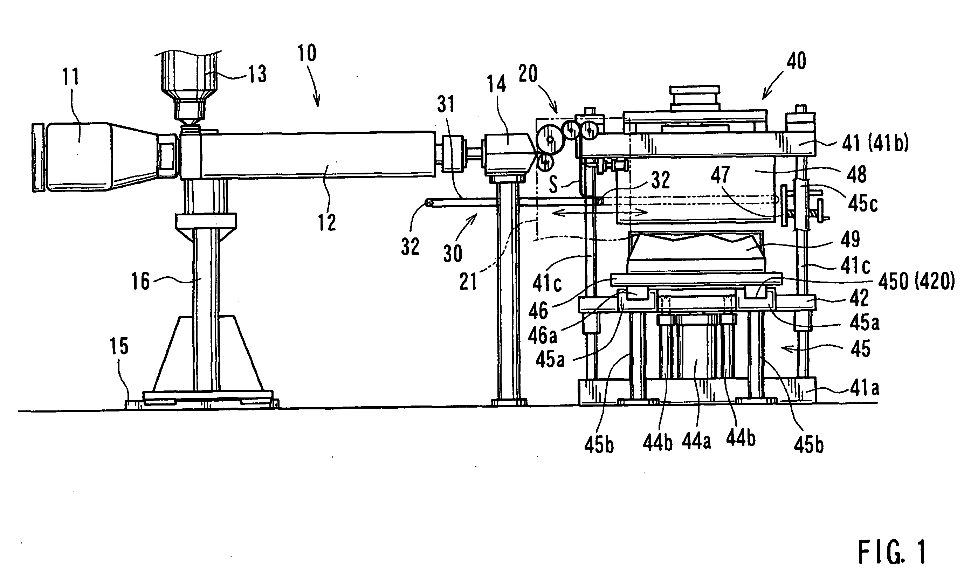

As shown in FIGS. 1 to 4, a press-molding machine of the present invention generally comprises an extrusion apparatus 10, a roller mechanism 20, a transfer apparatus 30, and a molding apparatus 40, which can be independently arranged and constructed.

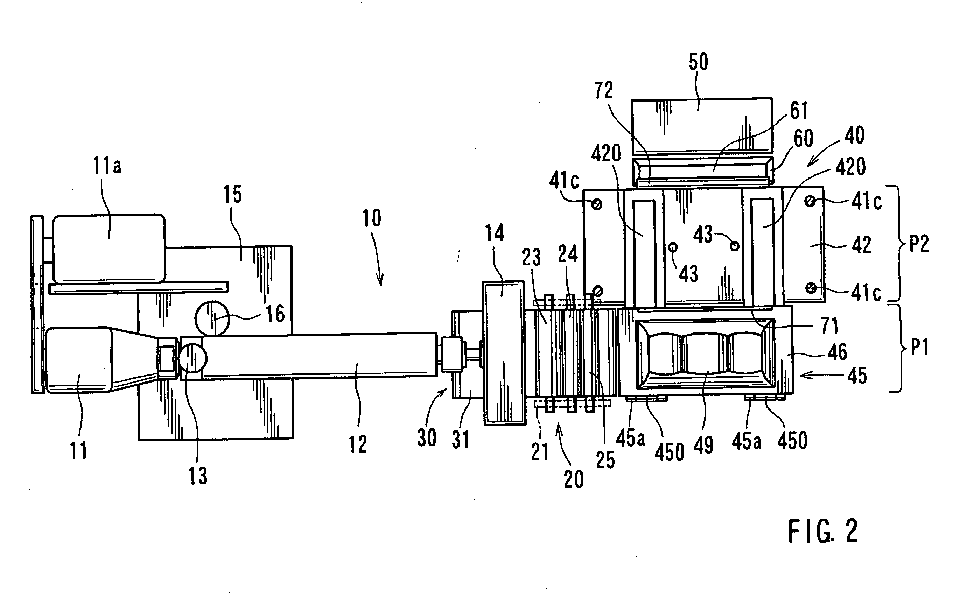

The extrusion apparatus 10 comprises an extruder 11 driven by a motor 11a (shown in FIG. 2), and a sheet molding portion 12. The sheet molding portion 12 is generally cylindrically shaped and connected with the motor 11a. Also, the sheet molding portion 12 is provided therein with particulate or granulated resins from a hopper 13 and may heat and melt the resins. Driven by the extruder 11, the melted resin is fed to an extrusion die 14 and molded into a sheet shape. The sheet-shaped resin fed from the sheet molding portion 12 is formed and extruded by the extrusion die 14 into a sheet material with a predetermined width and thickness.

The extrusion apparatus 10 is supported by a supporting column 16 standing on a base 15 on the floor. The base 15 can move along the floor to the left and the right in FIGS. 1 and 2. The extrusion apparatus 10 can move up and down along the suporting column 16. Also, the extrusion apparatus 10 can pivot about the supporting column 16. Therefore, it is possible to adjust the height or the horizontal position of the extrusion die 14 of the extrusion apparatus 10.

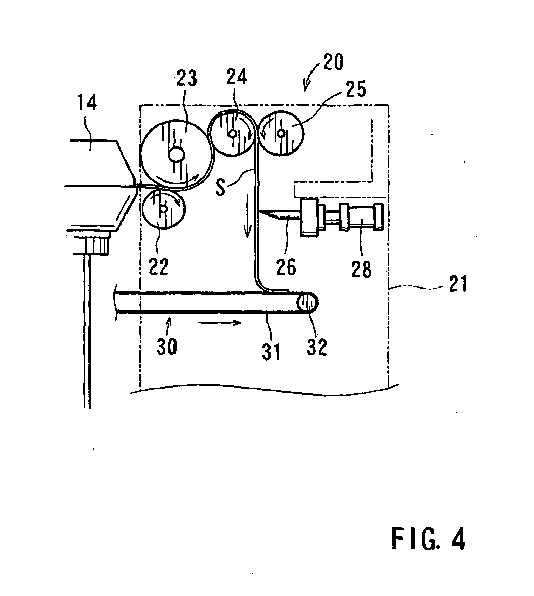

The roller mechanism 20 is disposed in proximity to the outlet of the extrusion die 14. The roller mechanism 20 includes a frame member 21 and four rollers 22 to 25 that are supported on a frame member 21. It should be understood that the frame member 21, depicted with chain lines, may be extended from the floor as a stand, or extended from the extrusion die 14. As clearly shown in FIG. 4, each roller 22 to 25 is rotated in the direction shown by arrow. A sheet material S is extruded from the extrusion die 14 and initially fed between the rollers 22 and 23. Then, the sheet material S is rolled up by the roller 23 and passed between the rollers 23 and 24. The sheet material S is further passed between the rollers 24 and 25 and fed downward to the transfer apparatus 30. When the sheet material S is passed through the rollers 22 to 25, the temperature of the sheet material S is controlled (cooled down) and the dimensions are adjusted such as width or thickness of the sheet material S.

Within the frame member 21 of the roller mechanism 20, a cutter 26 is disposed so as to be positioned directly below the rollers 24 and 25. Being activated by an air cylinder 28, a cutter 26 can move forward, or in the left direction, from a waiting position shown in FIG. 4. By moving the cutter 26 forward, the sheet material S fed downward through between the rollers 24 and 25 can be cut in a predetermined length corresponding to the product to be molded in the molding apparatus 40.

As shown in FIG. 1, the transfer apparatus 30 comprises a conveyor belt 31 bridged between a pair of conveyor rollers 32. The conveyor belt 31 can be reciprocated substantially horizontally between a first position, where it is positioned directly below the extrusion die 14 as depicted with solid lines in FIG. 1, and a second position, where it is positioned in front of the molding apparatus 40 as depicted with chain lines. It should be noted that the transfer apparatus 30 may be configured to rotate either of the conveyor rollers 32 as a well-known conveyor belt, or to rotate both of the conveyor rollers 32.

The molding apparatus 40 is an apparatus for press-molding the sheet material S into a predetermined shape. A receiving deck 45 is disposed in proximity to the molding apparatus 40. More specifically, the receiving deck 45 is positioned so as to be directly below the transfer apparatus 30 when the transfer apparatus 30 has moved from the solid line position to the chain line position in FIG. 1. The receiving deck 45 includes a pair of parallel slider rails 45a that are respectively supported by slider rail legs 45b extended from the floor. Both of the slider rails 45a may support a plate-like slider 46. The slider 46 can move along the slider rails 45a toward the molding apparatus 40.

The slider 46 is provided thereon with a lower die 49 of the molding apparatus 40. The lower die 49 may be configured to be a male die able to fit into a female die. In addition, the receiving deck 45 is provided thereabove with a stopper 47. As shown in FIG. 1, the stopper 47 is located opposed to the end of the transfer apparatus 30 when the transfer apparatus 30 has moved toward the chain line position.

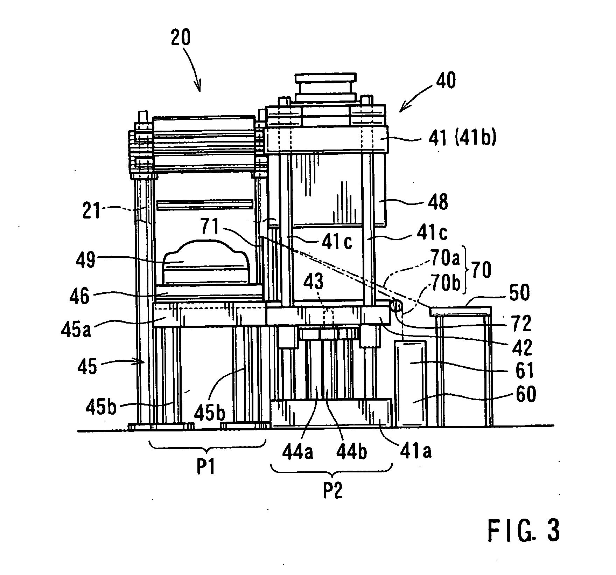

The molding apparatus 40 includes frame unit 41. The frame unit 41 includes four guide rods 41c that may connect an upper frame 41b with a lower frame 41a disposed on the floor. The bottom of the upper frame 41b is provided with a bottom-opening upper die 48, i.e. a female die, of the molding apparatus 40. The molding apparatus 40 includes a lifting base 42 that is disposed below the upper die 48. The lifting base 42 is arranged and constructed to move up or down, guided by the guide rods 41 c. Under the lifting base 42, an air cylinder 44a is provided so as to move the lifting base up or down. Thus, the activation control of the air cylinder 44a may enable the lifting base 42 to be moved up or down. As shown in FIGS. 2 and 3, a scrap shredder 60, including a scrap slot 61, and a product deck 50 are provided on the opposite side of the receiving deck 45 with respect to the molding apparatus 40.

The slider 46 of the receiving deck 45 can move with the lower die 49 toward a predetermined position on the lifting base 42 of the molding apparatus 40. As shown in FIGS. 2 and 3, the lifting base 42 may be provided with a pair of locator pins 43 for positioning the slider 46. The locator pins 43 can be projected above the top surface of the lifting base 42 or withdrawn below the top surface by air cylinders 44b shown in FIGS. 1 and 3. When the slider 46 is sliding on the lifting base 42, projecting the locator pins 43 above the top surface of the lifting base 42 may allow the locator pins 43 to be engaged into the bottom surface holes (not shown) of the slider 46 so that the slider 46 is positioned at a predetermined position on the lifting base 42.

Next, the molding apparatus 40 will be specifically described according to the sequential steps of the press-molding process after the transfer apparatus 30 has transferred the sheet material S onto the receiving deck 45. In the press-molding process, the sheet material S may be passed generally through the following four positions within the molding apparatus 40: a waiting position P1, a working position P2, a scrap shredder 60 position, and a product deck 50 position, from the left to the right in FIG. 3. The configuration of each position will be described below.

First, the waiting position P1 may be configured mainly regarding the lower die 49 used for press-molding. The lower die 49 is secured onto the substantially central portion of the slider 46. The top surface of the lower die 49 may fit to the bottom surface of the upper die 48. The slider 46 may be generally formed as a rectangular plate. The bottom surface of the slider 46 is provided with a pair of parallel rail engaging portions 46a extending substantially over the transverse direction. Each of the rail engaging portions 46a may have a generally rectangular cross section. The rail engaging portions 46a slidably engage the slider rails 45a. As best shown in FIG. 1, the top of each slider rail 45a may have a first slider engaging groove 450 forming a substantially U-shaped cross section. The two rail engaging portions 46a respectively engage the first slider engaging groove 450. The slider 46 may be actuated by a conventional driver such as an air cylinder, which is not shown for a purpose of clarity.

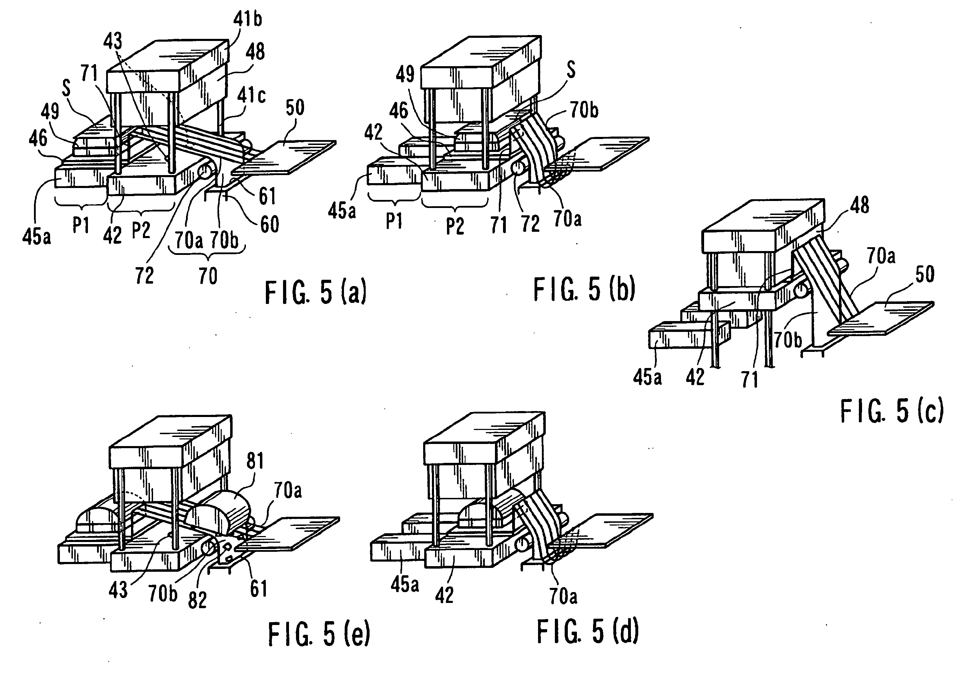

As shown in FIGS. 2 and 3, at the working position P2, the edge of the top surface of the slider 46 is provided with a chute supporting member 71, which may stand generally vertical on the top surface of the slider 46. The chute supporting member 71 may generally have a frame shape. The vertical legs of the member 71 are secured onto the top surface of the slider 46. On the other hand, the horizontal portion of the chute supporting member 71 is disposed substantially over the longitudinal length of the lower die 49. Also, the horizontal portion of the chute supporting member 71 is provided with a chute 70 having an upper chute 70a and an lower chute 70b, both of which are shown with chain lines in FIG. 3. The lower chute 70b, which may consist of a flexible polymer sheet, is stretched from the chute supporting member 71 via a lower chute guide 72 at the working position P2 to a scrap slot 61 or an upper opening of the scrap shredder 60. The upper chute 70a is disposed above the lower chute 70b. The upper chute 70a may include four wires of a flexible metal or polymer in predetermined spaced parallel relation to each other (see FIGS. 5(a) to 5(e)). The four wires are stretched to the product deck 50.

Second, the working position P2 is configured mainly regarding the upper die 48 used for press-molding. The overall profile of the upper die 48 may have a substantially rectangular shape with an opening bottom end. Although not shown, the inside profile of the upper die 48 is configured to fit the outside profile of the lower die 49 in order to perform a prescribed press-molding. When fitting to the upper die (female die) 48, the lower die (male die) 49 may enter into the upper die 48. In addition, the inside of the upper die 48 is provided with a conventional cutting means (not shown), which may cooperate with the lower die 49 to trim the scrap away from a molded product 81 and to cut the scrap into scrap pieces 82 (see FIG. 5(e)). The inside of the upper die 48 may further be provided with a releasing means (not shown) that may operably release and drop off the product 81 adhered to the inside surface of the upper die 48 immediately after press-molding. These cutting and releasing means may allow the molded product 81 and scrap pieces 82 to be more easily caught and recovered. As best shown in FIGS. 3 and 5(a), the top of the upper die 48 is secured to the upper frame member 41b having a substantially rectangular plate shape. Four guide rods 41c having a substantially cylindrical shape are respectively threaded and secured at the four corners of the upper frame member 41b or the rectangular plate. Thus, the upper frame member 41b is secured to the lower frame member 41a via the guide rods 41 c. It should be understood that the structural elements depicted on the top of the upper frame 41b in FIGS. 1 and 3 may serve as conventional fixtures or fasteners for the upper die 48 and the guide rods 41 c.

Shown in FIG. 3, the lifting base 42 in the working position P2 is disposed at substantially the same level as the slider rails 45a in the waiting position P1. The overall profile of the lifting base 42 may have a substantially rectangular plate shape, at the four corners of which the guide rods 41c are threaded through the lifting base 42. It should be noted that the lifting base 42 is configured to be moved up and down along the guide rods 41c by actuation of the air cylinder 44a as a driving source mounted on the lower frame member 41a. The lower lifting limit of the lifting base 42 may be substantially the same level as the slider rails 45a, while the upper lifting limit thereof may be high enough for the lower die 49 mounted on the lifting base 42 to fit into the upper die 48 to then perform press-molding. The lifting base 42 is also positioned sufficiently close to the slider rails 45a in order to smoothly receive the slider 46 moving from the slider rails 45a.

The structure of the lifting base 42 will be more specifically described below. As best shown in FIG. 2, the top surface of the lifting base 42 is provided with two parallel second slider engaging grooves 420, both of which may extend transversely on the top surface of the lifting base 42. Each of the second slider engaging grooves 420 may have a substantially U-shaped cross section provided on the lifting base 42. The second slider engaging grooves 420 in the working position P2 are configured to serve as continuous rail grooves from the first slider engaging grooves 450 in the waiting position P1. Thus, the slider 46, moving from the waiting position P1, may slide continuously to the working position P2.

It should be noted that the lifting base 42 is provided with a pair of holes spaced apart and pierced in substantially the middle of the transverse length of the lifting base 42 so that the pair of locator pins 43 can be engaged into the holes provided on the bottom of the slider 46 when the slider 46 has moved onto the lifting base 42, or the working position P2. As best shown in FIG. 3, the locator pins 43 are arranged and constructed to be projected through these holes from the bottom surface through the top surface of the lifting base 42. Then, the locator pins 43 may be engaged into the corresponding holes (not shown) of the bottom surface of the slider 46 so that the slider 46, or the lower die 49, is positioned at a predetermined position on the lifting base 42. It should also be noted that the locator pins 43 are configured to be moved up and down by the air cylinders 44b as a driving source mounted on the lower frame member 41 a.

As shown in FIGS. 2 and 3, the side of the lifting base 42 in the vicinity of the scrap shredder 60 is provided with a lower chute guide 72 substantially over the longitudinal length of the scrap shredder 60. The lower chute guide 72 is configured to guide the sheet-shaped lower chute 70b into the scrap slot 61 from the chute supporting member 71 mounted on the slider 46. It should be noted that the lower chute guide 72 may be configured to allow the lower chute 70b to follow the horizontal reciprocatory movement of the slider 46 and the vertical lifting movement of the lifting base 42 or the slider 46. Therefore, although the shape of the lower chute guide 72 is cylindrical in shape, it is not limited to such specific shape as long as the above-mentioned configuration is assured.

Third, the scrap shredder 60 may be a conventional shredder for shredding resin pieces generated during the trimming process of press-molding. The scrap shredder 60 is configured to shred the resin scrap pieces 82, which may slip and slide downwardly along the sheet-shaped lower chute 70b into the scrap slot 61 as shown in FIG. 5(e), in order to recycle the scrap pieces 82 into a reworked material for another sheet material S. It should be noted that, although the shape of the scrap shredder 60 is depicted as a rectangular box in the figures for the purpose of clarity, it is not limited to such a specific shape. It should also be noted that, although the scrap shredder 60 is positioned close to the molding apparatus 40, the scrap shredder 60 may be positioned away from the molding apparatus 40. In this case, the scrap pieces 82 may be transferred from the lower chute 70b in the molding apparatus 40 to the scrap shredder 60 by a certain transfer means such as a conveyor belt.

Fourth, the product deck 50 may be in a conventional table shape. However, the product deck 50 may have a lock means to hold one end of the wire-shaped upper chute 70a stretched from the chute supporting member 71 on the slider 46. Therefore, the resin product 81, caught by the upper chute 70a, may slide downwardly along the upper chute 70a toward the product deck 50 to be loaded thereon. It should be noted that the product 81 loaded on the product deck 50 may be post-processed in situ or transferred away from the product deck 50 to another area for a post-processing by a certain transfer means such as a conveyor belt.

The operation of the press-molding machine of the present invention will be described below. First, the process wherein melted resin is extruded into a sheet material S and then cut by the cutter 26 will be described below.

As previously described, the sheet material S extruded from the extrusion die 14 of the extrusion apparatus 10 may be controlled in temperature and adjusted in dimension by passing through the rollers 22 to 25 within the roller mechanism 20. After passing between the rollers 24 and 25, the sheet material S may be fed onto the conveyor belt 31 of the transfer apparatus 30, waiting in the position depicted with solid lines in FIGS. 1 and 4. At this point, the transfer apparatus 30 may receive the sheet material S onto the conveyor belt 31, moving from the solid line position to the chain line position in FIG. 1 at a speed corresponding to the sheet material feeding speed, i.e. the speed at which the sheet material S is extruded from the extrusion die 14. The above-mentioned operation may enable the sheet material S to be appropriately fed onto the conveyor belt 31 without being overlapped, folded or wrinkled.

Then, the sheet material S may be cut by the cutter 26 in a predetermined length the corresponds to a single molded product to be fed onto the conveyor belt 31. After receiving the sheet material S corresponding to a single molded product onto the conveyor belt 31, the transfer apparatus 30 may move faster toward the chain line position in FIG. 1 by switching its moving speed to high-speed, and then stop at the chain line position. The chain line position of the transfer apparatus 30 in FIG. 1 is located directly above the receiving deck 45. On the receiving deck 45 is positioned the lower die 49 mounted on the slider 46. At this position, the sheet material S on the conveyor belt 31 may be loaded onto the lower die 49. During the feeding, the transfer apparatus 30 may move back toward the solid line position in FIG. 1 at a predetermined speed at which the conveyor rollers 32 may rotate and drive the conveyor belt 31 to unload the sheet material S. Therefore, the sheet material S may be unloaded properly onto the lower die 49. After having unloaded the sheet material S onto the lower die 49, the transfer apparatus 30 may move back faster toward the solid line position in FIG. 1 by switching its moving speed to high-speed. Then, the transfer apparatus 30 may be allowed to receive on the conveyor belt 31 another sheet material S extruded from the extrusion die 14 of the extrusion apparatus 10 for the next press-molding.

It should be noted that when the transfer apparatus 30 has stopped at the chain line position in FIG. 1, the sheet material S may be prevented from passing, due to inertia, beyond the predetermined position by a stopper 47, shown also in FIG. 1, blocking the sheet material S on the conveyor belt 31. Furthermore, when the transfer apparatus 30 unloads the sheet material S on the conveyor belt 31 onto the lower die 49, the sheet material S may be prevented from passing, due to inertia, beyond the predetermined position by a stopper 47 blocking the sheet material S. As shown in FIG. 1, this stopper 47 is supported on a portion of a vertical frame member 45c of the receiving deck 45 in such a manner that the position may be adjustable.

Next, the process wherein the sheet material S cut by the cutter 26 is transferred to the molding apparatus 40 for press-molding will be described below with reference to FIGS. 5(a) to 5(e). It should be noted that FIGS. 5(a) to 5(e) respectively show each step of the process schematically and do not include some specific elements shown in FIGS. 1 to 3 such as the first slider engaging groove 450 and the slider rail legs 45b for the purpose of clarity.

The steps shown in FIGS. 5(a) to 5(e) will be respectively described below in a time-series manner.

The first step of the press-molding process is shown in FIG. 5(a). The sheet material S may be fed by the transfer apparatus 30 and loaded onto the lower die 49, ready and waiting at the waiting position P1. At this point, at the working position P2, the lifting base 42 is waiting on substantially the same level as the slider rails 45a. It should be noted that the chute 70 may be stretched with a certain tension from the chute supporting member 71 standing on the edge of the slider 46 mounting the lower die 49 to the scrap shredder 60 and the product deck 50.

The second step of the press-molding process is shown in FIG. 5(b). The slider 46 mounting the lower die 49, on which the sheet material S has been loaded at the waiting position P1, may slide to the working position P2 along the slider rails 45a. The sliding may allow the slider 46 to reach a predetermined position where the lower die 49 of the slider 46 can fit properly into the upper die 48. At this position, the slider 46 may be positioned by the locator pins 43, which may be projected from the lifting base 42 so as to be engaged into the holes provided on the bottom surface of the slider 46 (not shown). During the sliding, the chute 70, stretched from the chute supporting member 71, may move closer to the scrap shredder 60 and the product deck 50. This may result in loosening the wire-shaped upper chute 70a due to gravity, while the sheet-shaped lower chute 70b may be adjusted to maintain the original level of tension by a tension control means (not shown) within the scrap shredder 60 cooperating with the lower chute guide 72. It should be understood that such tension control means may also be applicable to the upper chute 70a in order to maintain the original tension thereof. Such tension control means may prevent the chute 70 from jamming into a clearance, for example, between the slider 46 and the lifting base 42.

The third step of the press-molding process is shown in FIG. 5(c). At the working position P2, the lower die 49 on the slider 46, positioned to fit properly into the upper die 48, may be moved up toward the upper die 48 with the sheet material S on the lower die 49, according to the lifting of the lifting base 42 by the air cylinder 44a (shown in FIGS. 1 and 3). The lifting of the lifting base 42 may allow the lower die 49 to enter into the upper die 48 in order to perform the press-molding. During the press-molding, the sheet material S may be molded between the upper die 48 and the lower die 49 into a predetermined shape, while the periphery of the sheet material S may adhere to the inside surface of the upper die 48.

It should be noted that this adhering may happen naturally because of the pressing between the upper die 48 and the lower die 49. However, the adhering may be ensured by using a holding means such as vacuum suction in order to not release the molded product 81 down inadvertently. On the other hand, the chute supporting member 71 on the edge of the slider 46 may also be moved up with the lifting base 42. The chute supporting member 71 may be placed opposite to the upper die 48. At this moment, the upper chute 70a may be stretched again without loosening because the chute supporting member 71 has been moved away enough from the product deck 50 to maintain the original tension.

The fourth step of the press-molding process is shown in FIG. 5(d). At the working position P2, the after-molding sheet material S adhered to the inside surface of the upper die 48, i.e. the product 81 and the scrap 82, may be maintained within the upper die 48. Then, the lower die 49 may be moved down with the lifting base 42, while the product 81 and the scrap 82 remain within the upper die 48. The lifting base 42 may move down until the lifting base 42 has been positioned at the same height as the slide rails 45a, i.e. at substantially the same level as shown in FIG. 5(b). On the other hand, the upper chute 70a may be loosened again as well as shown in FIG. 5(b) since the chute supporting member 71 has also been lifted down.

The fifth step of the press-molding process is shown in FIG. 5(e). After the fourth step shown in FIG. 5(d), the slider 46 may slide back from the working position P2 to the waiting position P1 shown in FIG. 5(e), where the slider 46 may be ready and waiting for another cycle of the press-molding process. It should be noted that the upper chute 70a and the lower chute 70b may have been stretched with the same original tension as in FIG. 5(a). As a result of the upper chute 70a and the lower chute 70b being stretched by the tension, the product 81 trimmed away by the cutter mechanism of the upper die 48 (not shown) as well as the scrap pieces 82 may be dropped down by a certain dropping means (not shown) to be easily processed. Specifically, the product 81 may be large enough to be caught on the stretched wires of the upper chute 70a, along the slope of which the product 81 may slide down toward the product deck 50.

On the other hand, the scrap pieces 82 may be small enough to pass between the wires of the upper chute 70a so that the scrap pieces 82 may fall down on the sheet-shaped lower chute 70b to be led into the scrap slot 61 due to the slope of the lower chute 70b. It should be noted that, even if some of the scrap pieces 82 should stay inadvertently on the sheet of the lower chute 70b, the scrap pieces 82 may be expected to be shaken off in the course of repeating the cycle of the press-molding process from FIG. 5(a) to FIG. 5(e).

After the product 81 and the scrap pieces 82 have been processed in a predetermined manner, another sheet material S may be loaded onto the lower die 49 ready and waiting at the waiting position P1 shown in FIG. 5(a), and another cycle from FIG. 5(a) to FIG. 5(e) will be repeated.

## Claims

1. A press-molding machine, comprising:
a slider (46);slider rails (45a) slidably engaging the slider (46);
a lower die (49) onto which a resin sheet material (S) is loaded, the lower die (49) secured on the slider (46) so as to move with the slider (46); and
an upper die (48) arranged and constructed to engage the lower die (49) for press-molding,
wherein the lower die (49) on the slider (46) is arranged and constructed to slidingly move reciprocably between a first position where the lower die (49) can receive the resin sheet material (S) and a second position where the lower die (49) is positioned directly below the upper die (48) for a closing movement between the upper die (48) and the lower die (49),
**characterized in that**
the press-molding machine further comprises a chute (70) arranged and constructed to catch a molded product (81) and/or scrap pieces dropped from the upper die (48), wherein the chute (70) is provided on the slider (46), and wherein when the slider (46) is in the position where the resin sheet material (S) is loaded onto the lower die (49) secured on the slider (46), the chute (70) is positioned directly below the upper die (48) to catch the molded product (81) and/or the scrap pieces (82).

2. The press-molding machine as in claim 1, further comprising: a locator means (43),wherein the slider (46) is positioned in a predetermined position for press-molding by the locator means (43) when slidably moving to the position where the lower die (49) is positioned directly below the upper die (48).

3. The press-molding machine as in claim 1 or 2, the chute (70) comprising: an upper chute (70a) including multiple parallel wires; and a lower chute (70b) formed in a sheet shape and provided directly below the upper chute (70a), wherein both of the upper chute (70a) and the lower chute (70b) are arranged and constructed to move according to the sliding movement of the lower die (49) on the slider (46) and the closing movement between the upper die (48) and the lower die (49).

4. The press-molding machine as in any of the preceding claims, further comprising: a scrap shredder (60) including a scrap slot (61), wherein one end of the lower chute (70b) is guided into the scrap slot (61) so that the scrap pieces (82) dropped from the upper die (48) are caught on the lower chute (70b), thrown into the scrap slot (61), and then shredded.

5. A method of press-molding, comprising the steps of:
a) providing a sheet material (S) in a predetermined length corresponding to a single molded product (81);
b) feeding the sheet material (S) onto a conveyor belt (31);
c) loading the sheet material (S) from the conveyor belt (31) onto a lower die (49) at a waiting position (P1);
d) sliding the lower die (49) having the sheet material (S) from the waiting position (P1) to a working position (P2);
e) upwardly moving the lower die (49) having the sheet material (S) toward the upper die (48) at the working position (P2);
f) press-molding the sheet material (S) between the lower die (49) and the upper die (48);
g) downwardly moving the lower die (49) at the working position (P2);
h) sliding the lower die (49) back to the waiting position (P1); and
i) catching the molded product (81) and/or scrap pieces (82) dropped from the upper die (48) at the working position (P2) onto a chute (70) positioned directly below the upper die (48),

6. The method as in claim 5, wherein the conveyor belt (31) is arranged and constructed to move toward and away from the waiting position (P1).

7. The method as in claim 5 or 6, wherein the lower die (49) is reciprocable between the waiting position (P1) and the working position (P2).

8. The method as in one of claims 5 to 7, further comprising the step of: transferring the scrap pieces (82) to a scrap shredder (60).

9. The method as in one of claim 5 to 8, wherein the molded product (81) is operably maintained within the upper die (48) during the step g), and is operably dropped down in the step i).

## Patentansprüche

1. Formpressmaschine, umfassend:
ein Gleitstück (46); Gleitstückschienen (45a), die mit dem Gleitstück (46) gleitend in Eingriff stehen;
eine untere Pressform (49), die mit einem Harzfolienmaterial (S) beladen wird, wobei die untere Pressform (49) an dem Gleitstück (46) derart befestigt ist, dass sie sich mit dem Gleitstück (46) bewegt; und
eine obere Pressform (48), die dazu angeordnet und eingerichtet ist, in die untere Pressform (49) zum Formpressen einzugreifen,
wobei die untere Pressform (49) auf dem Gleitstück (46) dazu angeordnet und eingerichtet ist, sich zwischen einer ersten Position, in der die untere Pressform (49) das Harzfolienmaterial (S) aufnehmen kann, und einer zweiten Position, in der die untere Pressform (49) direkt unter der oberen Pressform (48) zu einer schließenden Bewegung zwischen der oberen Pressform (48) und der unteren Pressform (49) positioniert ist, gleitend hin- und herzubewegen,
**dadurch gekennzeichnet,**
**dass** die Formpressmaschine ferner eine Schütte (70) umfasst, die dazu angeordnet und eingerichtet ist, ein geformtes Produkt (81) und/oder Abfallteile aufzufangen, die von der oberen Pressform (48) gefallen sind, wobei die Schütte (70) auf dem Gleitstück (46) bereitgestellt ist und wobei die Schütte (70) direkt unter der oberen Pressform (48) positioniert ist, wenn das Gleitstück (46) in der Position ist, in der das Harzfolienmaterial (S) auf die an dem Gleitstück (46) befestigte untere Pressform (49) geladen wird, um das geformte Produkt (81) und/oder die Abfallteile (82) aufzufangen.

2. Formpressmaschine nach Anspruch 1, ferner umfassend ein Positionsgebermittel (43), wobei das Gleitstück (46) durch das Positionsgebermittel (43) zum Formpressen in einer vorbestimmten Position positioniert wird, wenn es sich gleitend in die Position bewegt, in der die untere Pressform (49) direkt unter der oberen Pressform (48) positioniert ist.

3. Formpressmaschine nach Anspruch 1 oder 2, wobei die Schütte (70) aufweist: eine obere Schütte (70a), die eine Vielzahl paralleler Seile enthält; und eine untere Schütte (70b), die in einer Folienform ausgebildet ist und direkt unter der oberen Schütte (70a) bereitgestellt ist, wobei sowohl die obere Schütte (70a) als auch die untere Schütte (70b) dazu angeordnet und eingerichtet sind, sich entsprechend der gleitenden Bewegung der unteren Pressform (49) auf dem Gleitstück (46) und der schließenden Bewegung zwischen der oberen Pressform (48) und der unteren Pressform (49) zu bewegen.

4. Formpressmaschine gemäß einem der vorhergehenden Ansprüche, ferner umfassend:
einen Abfallschredder (60), der einen Abfallschacht (61) enthält, wobei ein Ende der unteren Schütte (70b) in den Abfallschacht (61) geführt ist, so dass Abfallteile (82), die von der oberen Pressform gefallen sind, auf der unteren Schütte (70b) aufgefangen, in den Abfallschacht (61) geworfen und dann geschreddert werden.

5. Formpressverfahren, umfassend die folgenden Schritte:
a) Bereitstellen eines Folienmaterials (S) in einer vorbestimmten Länge, die einem einzelnen geformten Produkt (81) entspricht;
b) Zuführen des Folienmaterials (S) auf ein Förderband (31);
c) Laden des Folienmaterials (S) von dem Förderband (31) auf eine untere Pressform (49) in einer Warteposition (P1);
d) Gleiten der unteren Pressform (49) mit dem Folienmaterial (S) von der Warteposition (P1) in eine Arbeitsposition (P2);
e) Aufwärtsbewegen der unteren Pressform (49) mit dem Folienmaterial (S) zu der oberen Pressform (48) in der Arbeitsposition (P2);
f) Formpressen des Folienmaterials (S) zwischen der unteren Pressform (49) und der oberen Pressform (48);
g) Abwärtsbewegen der unteren Pressform (49) in der Arbeitsposition (P2);
h) Gleiten der unteren Pressform (49) zurück in die Warteposition (P1); und
i) Auffangen des geformten Produkts (81) und/oder der Abfallteile (82), die von der oberen Pressform (48) in der Arbeitsposition (P2) gefallen sind, auf einer Schütte (70), die direkt unterhalb der oberen Pressform (48) positioniert ist.

6. Verfahren nach Anspruch 5, wobei das Förderband (31) dazu angeordnet und eingerichtet ist, sich zu der Warteposition (P1) hin und von dieser weg zu bewegen.

7. Verfahren nach Anspruch 5 oder 6, wobei sich die untere Pressform (49) zwischen der Warteposition (P1) und der Arbeitsposition (P2) hin- und herbewegen lässt.

8. Verfahren nach einem der Ansprüche 5 bis 7, ferner umfassend den Schritt des Überführens der Abfallteile (82) in einen Abfallschredder (60).

9. Verfahren nach einem der Ansprüche 5 bis 8, wobei das geformte Produkt (81) während Schritt g) funktionsfähig innerhalb der oberen Form (48) gehalten wird und in Schritt i) funktionsfähig herunterfallen gelassen wird.

## Revendications

1. Machine de moulage par presse, comprenant :
un coulisseau (46) ; des rails de coulisseau (45a) mettant en prise de manière à pouvoir coulisser le coulisseau (46) ;
une matrice inférieure (49) sur laquelle un matériau en feuille de résine (S) est chargé, la matrice inférieure (49) étant fixée sur le coulisseau (46) de manière à se déplacer avec le coulisseau (46) ; et
une matrice supérieure (48) agencée et construite pour se mettre en prise avec la matrice inférieure (49) pour le moulage par presse,
dans laquelle la matrice inférieure (49) sur le coulisseau (46) est agencée et construite pour se déplacer en coulissant en va-et-vient entre une première position à laquelle la matrice inférieure (49) peut recevoir le matériau en feuille de résine (S) et une deuxième position à laquelle la matrice inférieure (49) est positionnée directement au-dessous de la matrice supérieure (48) pour un mouvement de fermeture entre la matrice supérieure (48) et la matrice inférieure (49),
**caractérisée en ce que**
la machine de moulage par presse comprend en outre un déversoir (70) agencé et construit pour attraper un produit moulé (81) et/ou des rebuts tombés de la matrice supérieure (48), dans laquelle le déversoir (70) est fourni sur le coulisseau (46), et dans laquelle lorsque le coulisseau (46) est à la position à laquelle le matériau en feuille de résine (S) est chargé sur la matrice inférieure (49) fixée sur le coulisseau (46), le déversoir (70) est positionné directement au-dessous de la matrice supérieure (48) pour attraper le produit moulé (81) et/ou les rebuts (82).

2. Machine de moulage par presse selon la revendication 1, comprenant en outre : un moyen de localisation (43), dans laquelle le coulisseau (46) est positionné à une position prédéterminée pour le moulage par presse par le moyen de localisation (43) en coulissant à la position à laquelle la matrice inférieure (49) est positionnée directement au-dessous de la matrice supérieure (48).

3. Machine de moulage par presse selon la revendication 1 ou 2, le déversoir (70) comprenant : un déversoir supérieur (70a) comprenant de multiples fils parallèles ; et un déversoir inférieur (70b) en forme en feuille et fourni directement au-dessous du déversoir supérieur (70a), dans laquelle le déversoir supérieur (70a) et le déversoir inférieur (70b) sont agencés et construits pour se déplacer en fonction du mouvement coulissant de la matrice inférieure (49) sur le coulisseau (46) et du mouvement de fermeture entre la matrice supérieure (48) et la matrice inférieure (49).

4. Machine de moulage par presse selon l'une quelconque des revendications précédentes, comprenant en outre : un broyeur de rebuts (60) comprenant une fente de rebuts (61), dans laquelle une extrémité du déversoir inférieur (70b) est guidée dans la fente de rebuts (61) de sorte que les rebuts (82) tombés de la matrice supérieure (48) sont attrapés sur le déversoir inférieur (70b), jetés dans la fente de rebuts (61), puis broyés.

5. Procédé de moulage par presse, comprenant les étapes consistant à :
a) fournir un matériau en feuille (S) d'une longueur prédéterminée correspondant à un produit moulé unique (81) ;
b) alimenter le matériau en feuille (S) sur un tapis roulant (31) ;
c) charger le matériau en feuille (S) du tapis roulant (31) sur une matrice inférieure (49) à une position d'attente (P1) ;
d) faire coulisser la matrice inférieure (49) ayant le matériau en feuille (S) de la position d'attente (P1) à une position de travail (P2) ;
e) faire monter la matrice inférieure (29) ayant le matériau en feuille (S) vers la matrice supérieure (48) à la position de travail (P2) ;
f) mouler par presse le matériau en feuille (S) entre la matrice inférieure (49) et la matrice supérieure (48) ;
g) faire descendre la matrice inférieure (49) à la position de travail (P2) ;
h) faire coulisser la matrice inférieure (49) de retour à la position d'attente (P1) ; et
i) attraper le produit moulé (81) et/ou les rebuts (82) tombés de la matrice supérieure (48) à la position de travail (P2) sur un déversoir (70) positionné directement au-dessous de la matrice supérieure (48).

6. Procédé selon la revendication 5, dans lequel le tapis roulant (31) est agencé et construit pour se déplacer à destination et à l'écart de la position d'attente (P1).

7. Procédé selon la revendication 5 ou 6, dans lequel la matrice inférieure (49) peut se déplacer en va-et-vient entre la position d'attente (P1) et la position de travail (P2).

8. Procédé selon l'une quelconque des revendications 5 à 7, comprenant en outre l'étape consistant à transférer les rebuts (82) dans un broyeur de rebuts (60).

9. Procédé selon l'une quelconque des revendications 5 à 8, dans lequel le produit moulé (81) est maintenu de manière utilisable à l'intérieur de la matrice supérieure (48) au cours de l'étape g), et est tombé de manière à pouvoir être utilisé à l'étape i).
